**Europäisches Patentamt**

(19) **European Patent Office**

**Office européen des brevets**

(11) Publication number: **0 143 594**

**B1**

(12) **EUROPEAN PATENT SPECIFICATION**

(45) Date of publication of patent specification: **08.07.87**　　(51) Int. Cl.⁴: **B 60 J 3/00**

(21) Application number: **84308032.6**

(22) Date of filing: **20.11.84**

(54) **Mirror assembly.**

(30) Priority: **21.11.83 US 553645**

(43) Date of publication of application:
**05.06.85 Bulletin 85/23**

(45) Publication of the grant of the patent:
**08.07.87 Bulletin 87/28**

(84) Designated Contracting States:
**DE FR GB IT**

(56) References cited:
**EP-A-0 099 454**
**FR-A-1 096 174**
**US-A-2 003 248**
**US-A-3 542 455**

(73) Proprietor: **PRINCE CORPORATION**
**Windcrest Drive**
**Holland Michigan 49423 (US)**

(72) Inventor: **Marcus, Konrad Hugh**
**1162 Waukazoo Drive**
**Holland Michigan (US)**
Inventor: **Chu, Zooey Chiatien**
**1918 Willow**
**Holland Michigan (US)**

(74) Representative: **Robinson, Anthony John**
**Metcalf et al**
**30 John Street**
**London, WC1N 2DD (GB)**

Courier Press, Leamington Spa, England.

## Description

The present invention relates to a mirror assembly particularly to a mirror assembly covered by a flexible cover and to such an assembly mounted in an automotive visor.

Vanity mirrors for use in vehicles and particularly mounted in the visors of vehicles have become standard equipment on many cars and popular options on others. Preferably, the mirror is covered when not in use to provide a protective cover for safety as well as covering the reflective surface which can be distracting to the driver of the vehicle. U.S.—A—4,227,242 describes an illuminated vanity mirror with a cover which pivots from the plane of the visor to selectively expose the mirror for use and provide a protective cover for the mirror when not in use. FR—A—2,429,685, described a visor having a mirror mounted therein which includes one or more sliding doors for providing a protective covering for the mirror. With such a sliding cover, the size of the mirror is greatly diminished since the rigid door must be stored in the same plane as the mirror and occupies a significant area of the visor.

US—A—3542455 discloses a device according to the pre-characterising features of claim 1.

According to one aspect of the present invention a visor with a mirror assembly is characterised in that the elongate guide members comprise spaced rod means mounted to the frame, the assembly including edge members extending along opposite edges of the cover and stringing means extending over the rod means and coupling the rigid edge members to transfer tension forces from one edge member to the other for moving the flexible cover to selectively expose the mirror.

The present invention includes stringing means extending over the rod means and coupling the rigid edge members to transfer tension forces from one edge member to the other for moving the flexible cover to selectively expose the mirror. This has the advantage that it ensures positive travel of the cover between open and closed postions. The combination of rigid edge members extending along opposite edges of the cover and stringing means enables the cover to be smaller than that of the prior art. It also allows easier removal of the cover.

In a preferred embodiment the frame defines a housing extending adjacent the mirror, the cover being movable between a position extended from the housing and covering the mirror to a position within the housing to expose the mirror for use. The guide means may comprise rod means positioned within the housing for supporting the cover which wraps around the rod means when within the housing. The term rod means includes rollers.

One embodiment provides that the rod means comprises a pair of spaced rods extending between sides of the frame and at the top and bottom edges of the frame and at the stringing means extending over the spaced rods. Conveniently the rod means comprises a fixed rod and a concentric roller sleeve. The cover may be a fabric material or a tambour door construction.

A mirror assembly according to the present invention may be incorporated into a visor for a vehicle. Thus a preferred embodiment provides such a mirror assembly in conjunction with a visor for a vehicle, the mirror assembly conveniently in the form of a panel, being secured to the visor.

Another preferred embodiment provides a visor having a covered mirror comprising a visor body defining a housing, a mirror mounted to the visor body adjacent the housing, the housing comprises an aperture extending adjacent and along the mirror, a flexible cover, roller means mounted within the housing for supporting the flexible cover, and means for moving the flexible cover between a position covering the mirror and a position extending into the housing through the aperture to expose the mirror.

Preferably the housing is enlarged and extends along a top edge of the visor body and the roller means is positioned in the enlarged portion of the housing and comprises a biased roller to which one edge of the flexible cover is attached for winding the cover onto the roller for storage within the housing.

In the above aspects of the present invention the flexible cover preferably comprises a handle to enable the cover to be more easily moved. The handle is preferably covered to an edge of the flexible cover remote from the storing position and the roller means or rod means.

The present invention provides, at least in the preferred embodiments, a flexible cover for use in covering a mirror which occupies significantly less space than prior structures and provides an attractive and protective mirror cover particularly adapted for use with a vanity mirror mounted in a visor.

The invention may be put into practice in various ways but one mirror panel and one visor together with a number of alternative embodiments embodying the invention will now be described by way of example with reference to the accompanying drawings, in which:

Figure 1 is a front elevation of a mirror panel having a flexible cover shown in the closed position;

Figure 2 is a rear elevation of the structure shown in Figure 1;

Figure 3 is a front elevation of the structure shown in Figure 1 showing the cover in the open position exposing the mirror therebehind;

Figure 4 is a rear elevation of the structure shown in Figure 3;

Figure 5 is an enlarged, cross-section of the structure shown in Figure 3 taken along section line V—V of Figure 3;

Figure 6 is a greatly enlarged, fragmentary, cross-sectional view of the structure shown in Figure 2 taken along section VI—VI of Figure 2;

Figure 7 is a fragmentary, enlarged perspective

2

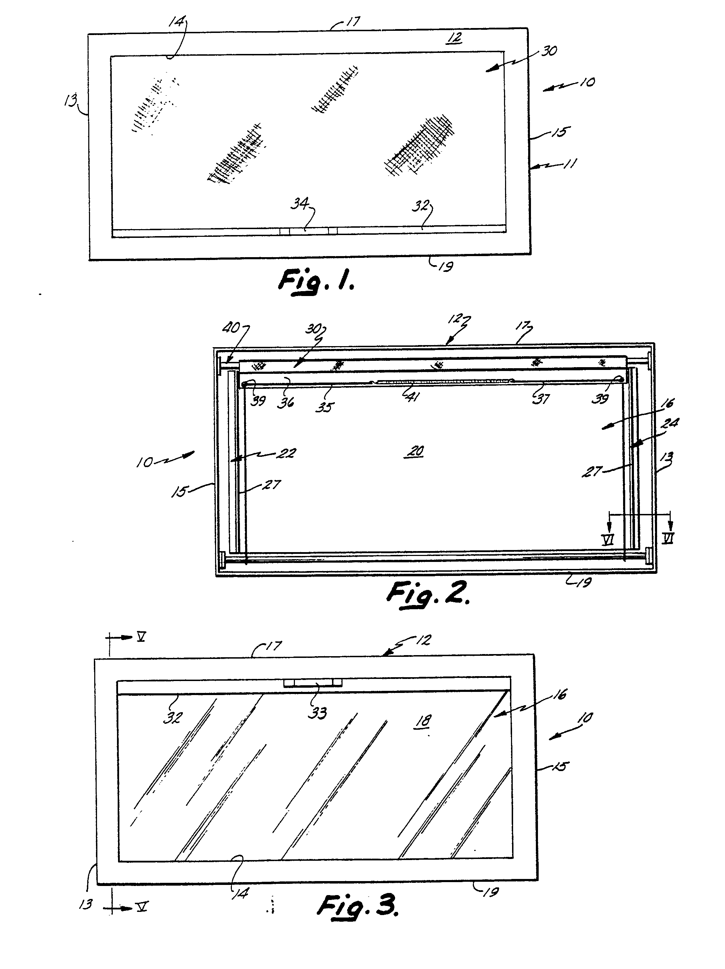

view of a portion of the guide and support means for the flexible cover of Figures 1 to 6;

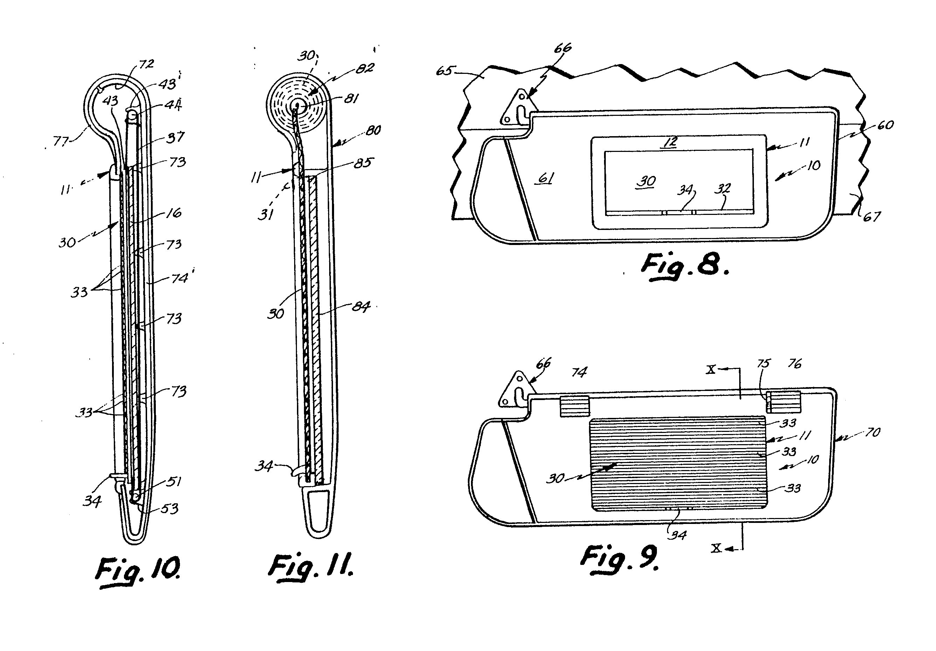

Figure 8 is a front elevational view of a visor according to the present invention;

Figure 9 is a front elevational view of an alternative embodiment shown mounted in a lighted visor;

Figure 10 is an enlarged, cross-section of the structure shown in Figure 9 taken along section line X—X of Figure 9; and

Figure 11 is a vertical, cross-section of yet another embodiment of the present invention.

Referring initially to Figures 1 to 4, a covered mirror panel 10 is shown which includes a generally rectangular frame 11 having a face portion 12 through which there is formed a large rectangular opening 14 for a mirror 16. The frame further includes left and right sidewalls 13 and 15 extending rearwardly from the face 12 and integrally joined upper and lower rearwardly extending walls 17 and 19 to define a housing for holding the mirror 16 therein behind the opening 14. The mirror 16 includes a reflective surface 18 (Figure 3) and a rear surface 20 (Figure 2). The mirror 16 is secured to the frame 11 behind the opening 14 by a pair of generally vertically extending guide channels 22 and 24 secured to the inside of the face 12 of the frame. Each of the guide channels 22, 24 is configured to provide a plurality of guiding and supporting functions. As best seen in Figure 6, the guide channel 24 includes a vertically and rearwardly extending wall portion 25 which extends from the rear surface of the face 12 of the frame 11 spaced slightly outwardly of the aperture 14. The portion or segment 25 extends rearwardly a sufficient distance to provide clearance for a cover 30 and the mirror 16. The channel 24 then extends inwardly toward the opening 14 to define a ledge 26 against which the rear surface 20 of the mirror 16 is seated and secured by, for example, a suitable bonding material such as an adhesive. Each of the guide channels 22 and 24 also includes a stub section 27 extending rearwardly for the ledge 26. The guide channels 22 and 24 extend vertically in parallel spaced relationship to each other substantially the same distance as the height of the mirror 16 which naturally is slightly larger than the opening 14 to fill the opening when exposed.

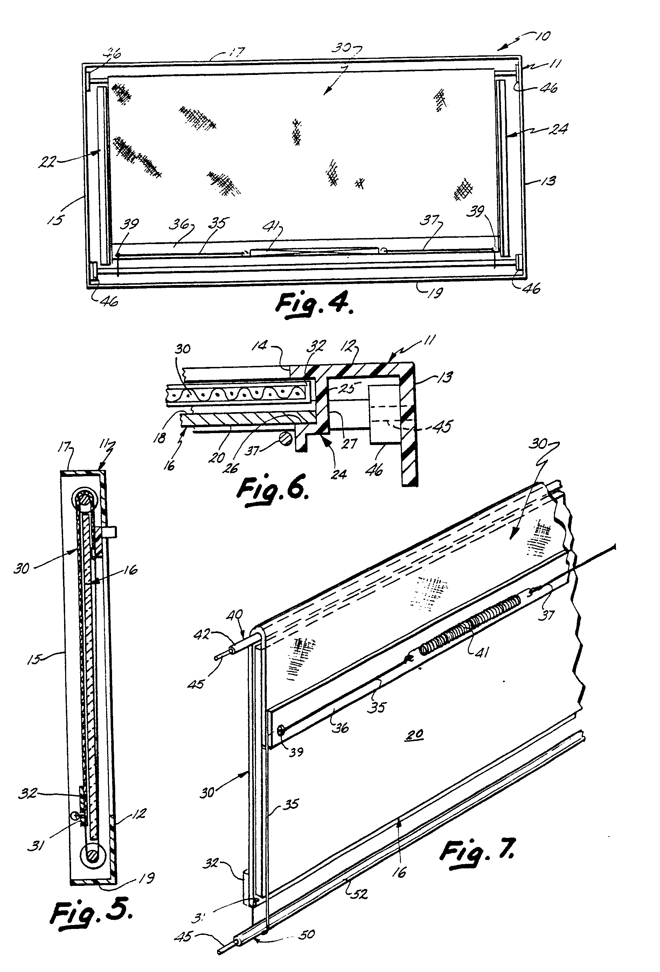

The mirror is selectively covered and uncovered by a flexible cover 30 which can be made of fabric such as a woven or knitted fabric typically used as the interior trim material of an automobile to thus match the cover appearance with that of the interior of the vehicle. The flexible cover 30 can likewise be made of flexible sheets of thin polymeric materials such as polyvinylchloride or the like or be of tambour construction with rigid wooden or plastic horizontal slats secured to a flexible fabric base. The lower edge of the fabric 30 is secured to a lower cover support 32 which comprises a flat, generally rectangular bar of rigid material such as polycarbonate to which the lower edge of the fabric cover 30 is secured by bonding adhesive or other conventional fastening means. The front centre area of the cover support 32 includes an outwardly extending handle 34 to facilitate movement of the cover between a closed position, as shown in Figure 1, to an open position, as shown in Figure 3. The support 32 extends, as best seen in Figure 6, adjacent the walls 25 of each of the guide channels 22 and 24 and is captively held in lateral alignment between the mirror 16 and th face 12 of the frame 11 by the guide channels which provide sufficient clearance for relatively easy motion of the support in a vertical direction between the channels 22 and 24. The flexible cover 30 is generally rectangular and has a length (i.e., dimension in the generally vertical direction as seen in the Figures) slightly greater than the height of the mirror so as to cover the entire height of the mirror with sufficient material to extend over an upper roller assembly 40 and downwardly behind the mirror 16 terminating in a second cover support 36, as seen in Figures 2, 4, 5 and 7. The support 36 extends between the stubs 27 of each of the guide channels 22 and 24, as seen in Figures 2 and 4, to be guidably supported thereby. The support 36, like the support 32, is a generally flat, rigid, rectangular member made of a suitable polymeric material and to which the upper edge of the flexible cover 30 is secured by suitable fastening means such as by bonding adhesives, by ultrasonic welding or the like. In order to transmit forces between the support 32 and the support 36 to move the flexible cover between the closed position shown in Figure 1, and the open position, as shown in Figure 3, the roller and line structure, as best seen in Figures 2, 4, 5, 6 and 7, is employed and is now described.

Extending between the sidewalls 13 and 15 of the frame 11 are a pair of upper and lower roller assemblies 40 and 50, respectively. Each of the roller assemblies comprise a rod 45 extending into mounting bosses 46 positioned in the inside corners of the sidewalls of the frame, as best seen in Figures 2 and 4. Apertures are formed through the mounting bosses and sidewalls 13 and 15 to receive the rods which are secured in position with respect to the frame. Coaxially surrounding the rods 45 are an upper sleeve 42 and a lower sleeve 52 made of a suitable material such as a polymeric material and which loosely fits over each of the rods 45 so as to rotate thereabout. This permits the flexible cover 30 to extend around the sleeve 42 and thereby easily move around the rod 45 through the relative rotation between the sleeve 42 and the rod 45. The opposite corners of the cover support 32 include apertures 31 formed therein for receiving the ends of the line segments 35 and 37 which, as best seen in Figures 5 and 7, extend downwardly from the support 32, around the sleeve 52 then upwardly and through apertures 39 in opposite ends of the support 36 and are joined to one another by tensioning means such as a tension spring 41.

The operation of the sliding, flexible cover can

best be understood by reference first to Figures 1 and 7 in which the mirror is covered by the flexible cover 30. If it is desired to uncover the mirror, the handle 34 attached to the support 32 is raised, which transmits tension force on the strings 35 and 37 which in turn pull downwardly on the support 36 to pull the cover 30 upwardly and over the pivot rod 45 by the rotation of the sleeve 42 therearound until the cover has been fully opened, as illustrated in Figure 5. The spring 41 simply maintains the tension on the lines 35 and 37 substantially constant and in some embodiments may not be necessary.

To close the cover once in an open position, as illustrated in Figure 3, tension of the fabric is applied directly through the support 32 by pushing the handle 34 downwardly which in turn allows the support 36 to follow the fabric in an upward direction back to the cover closed position, as illustrated in Figures 2 and 7. Thus, by use of the guide and support means, the flexible cover can be moved upwardly and downwardly using a single control handle 34 to urge the cover between a position in front of the reflective surface of the mirror mounted to the frame over and behind the surface of the mirror for exposing the mirror for use. The structure provides a very compact and relatively thin construction which is suitable for a variety of applications including use in an automotive visor, as shown in Figure 8.

In Figure 8, the covered mirror panel 10 is fitted within the body of a visor 60 having a moulded polymeric core including a recess for receiving the frame 11 of the assembly in a recessed fashion such that the face 12 of the frame 11 is substantially flush with the surface of the body of the visor 60. The visor body can be manufactured of a moulded polymeric material such as polypropylene, for example as described in US—A—4,227,241 with provision made for securing the frame 11 in place within the visor body by conventional attaching means. The flexible cover 30 can be a fabric which conforms to a fabric covering 61 associated with the visor body. The upholstery of the visor in turn is coordinated to the material of the interior of the vehicle 65 to which the visor is attached by means of a pivot arm assembly 66 which can be of a construction described (EP—A—98698 CUS Serial No. 392,534). Thus, when the visor is in a lowered position as illustrated in Figure 8, for blocking light entering from the windshield area 67 of the vehicle, the mirror faces the vehicle occupant and can be exposed for use as a vanity mirror by raising the handle 34 to selectively uncover the mirror moving it to the position illustrated in Figure 3.

Another embodiment of the invention is illustrated in Figures 9 and 10, and in which a visor 70 includes a covered mirror panel 10 according to the present invention. In this embodiment, the flexible cover 30 is of tambour door construction including a handle 34 at its lower edge for raising and lowering the door between a mirror covering position, as illustrated in Figure 9, to an open position, as illustrated in Figure 3. The tambour door 30 comprises a plurality of horizontally extending rigid slats 33, as seen in Figures 9 and 10, which are secured to a flexible backing material 43. The slats can be wood, plastics or other suitable material.

The visor 70 includes a moulded polymeric body including a generally semi-cylindrical housing 72 at its upper end, as seen in Figure 10, for receiving, as seen in Figure 9, a pair of spaced lamp assemblies 74 and 76 each including lamp means positioned behind lenses mounted to a visor and activated by a switch 75 coupling the lamps to the vehicle's electrical supply system for projecting illumination outwardly from the assembly 74 and 76 to illuminate the area in front of the mirror 16 positioned behind the cover 30. In this embodiment of the invention, the upper and lower roller assemblies 40 and 50 comprise rods 44 rotatably mounted to a pair of semi-cylindrical resilient polymeric sockets 43 integrally moulded in horizontally spaced relationship at the upper portion of the visor body and a pair of horizontally spaced lower semi-cylindrical resilient polymeric sockets 53 at the lower edge for rotatably receiving rod 51.

As in the embodiment shown in Figures 1 to 7, the covered mirror panel 10 mounted within the visor 70 includes tension strings 35 and 37 coupled to opposite edges of the tambour door 30 to assist in the opening and closing of the door by wrapping around the upper pivot rod 44. The mirror 16 is mounted on a plurality of mounting pads 73 which space the mirror from the back surface 74 of the visor sufficiently to allow the tambour door to fit behind the mirror and within the relatively thin visor body. The visor 70 is covered by a suitable upholstery fabric 77 to conform to the upholstery fabric of the vehicle interior in which the visor is mounted. The visor 70 also includes a pivot mounting bracket 66 for securing the visor to a vehicle and when in the lowered use position, illustrated in Figure 9, the lights 74 and 76 can be illuminated by activating the switch 75 to provide interior illumination of the vehicle as well as for providing facial illumination for use of the vanity mirror when the cover 30 is raised using the handle 34. Since the slats 33 forming the tambour construction have some rigidity, stringing 34 and 37 can be attached directly to the tambour door without cover supports.

In yet another embodiment of the invention, a visor 80 is provided, as illustrated in Figure 1, in which the visor body includes a generally cylindrical housing 82 extending along a top edge of the body of the visor which also supports a mirror 84 selectively covered by a flexible covering material 30 with a handle 34 along its lower edge for raising and lowering the cover. The cover is attached to the axle 81 of a spring actuated roller such as a small window shade-type roller extending within the housing 82 and around which the cover 30 can be wound, as illustrated in phantom form in Figure 11, when the cover is moved to an open position. To open the cover, it is necessary only to press the handle 34 slightly thereby releasing the catch controlling the spring wouund roller 81 whereupon it will rotate in a clockwise direction as illustrated in Figure 11 to roll the flexible cover 30 therearound and store it within the housing 82. The handle 34 contacts the upper edge of the frame 11 to prevent the cover from fully retreating into the housing 82. The housing 82 communicates with the area in front of the mirror 84 by means of a slot 85 extending along the top edge of the mirror 84 to provide clearance therefor. Guide channels similar to channels 22 and 24 shown in the first embodiment are employed to provide guided support for the edges of the cover 30. In some embodiments, the roller can be coupled directly to bias means such as a coil spring and tend to wind the cover around the roller, and handle 34 includes a releasable catch cooperating with the frame 11 to hold the cover in a closed position.

**Claims**

1. A visor (60) with a mirror assembly (10) comprising a frame (11) with a mirror (16) mounted thereto, a flexible cover (30) for the mirror, and elongate parallel guide members for guidably supporting the flexible cover to permit movement of the cover between a position covering the mirror and a position to expose the mirror for use, characterised in that the elongate guide members comprise spaced rod means (40, 50) mounted to the frame (11), the assembly including edge members (32, 36) extending along opposite edges of the cover (30) and stringing means (35, 37) extending over the rod means and coupling the rigid edge members to transfer tension forces from one edge member to the other for moving the flexible cover to selectively expose the mirror.

2. A visor as claimed in claim 1 in which the frame (11) defines a housing extending adjacent the mirror, the cover being movable between a position extended from the housing and covering the mirror to a position within the housing to expose the mirror for use.

3. A visor as claimed in claim 2 in which the rod means (40, 50) extend between sides of the frame (11) at the top and bottom edges of the frame.

4. A visor as claimed in claim 2 or 3 in which each of the rod means comprises a fixed rod (45) and a concentric roller sleeve (42, 52).

5. A visor as claimed in any of Claims 1 to 4 in which the cover moves in a generally vertical direction with respect to the mirror.

**Patentansprüche**

1. Blende (60) mit einer Spiegelgruppe (10) enthaltend: einen Rahmen (11) mit einem daran befestigten Spiegel (16), eine flexible Abdeckung (30) für den Spiegel und längliche, parallele Führungselemente, um die flexible Abdeckung geführt zu halten, damit eine Bewegung der Abdeckung zwischen einer den Spiegel abdeckenden Position und einer den Spiegel für den Gebrauch freigebenden Position möglich wird, gekennzeichnet dadurch, daß die länglichen Führungselemente voneinander beabstandete und an dem Rahmen (11) befestigte Stangen (40, 50) umfassen, wobei die Einrichtung Randstücke (32, 36) die sich entlang einerander gegenüberliegenden Kanten der Abdeckung (30) erstrecken, und Zugelemente (35, 37) aufweist, die sich über die Stangen erstrecken und die starren Randstücke miteinander verbinden, um Spannungskräfte von einem Kantenstück zu dem anderen zu übertragen, um die flexible Abdeckung so zu bewegen, daß sie selektiv den Spiegel freigibt.

2. Blende nach Anspruch 1, in welcher der Rahmen (11) ein sich angrenzend an den Spiegel erstreckendes Gehäuse bildet, wobei die Abdeckung zwischen einer aus dem Gehäuse herausgezogenen und den Spiegel verdeckenden Position und einer im Gehäuse befindlichen, den Spiegel freigebenden Position bewegt werden kann.

3. Blende nach Anspruch 2, in welcher sich die Stangen (40, 50) zwischen den Seiten des Rahmens (11) an der Oberkante und der Unterkante des Rahmens erstrecken.

4. Blende nach Anspruch 2 oder 3, in welcher jede der Stangen eine ortsfeste Stange (45) und eine rundlaufende Rollenhülse (42, 52) aufweist.

5. Blende nach einem der Ansprüche 1 bis 4, in welcher sich die Abdeckung bezüglich des Spiegels in einer im wesentlichen vertikalen Richtung bewegt.

**Revendications**

1. Pare-soleil (60) muni d'un ensemble miroir (10) qui comprend un cadre (11) muni d'un miroir (16) monté dans ce cadre, un store flexible (30) pour le miroir, et des éléments de guidage parallèles et de forme allongée servant à supporter le store flexible avec guidage pour permettre le déplacement du store entre une position qui masque le miroir et une position qui démasque le miroir pour l'utilisation, caractérisé en ce que les éléments de guidage de forme allongée comprennent des moyens de type tringle espacés (40, 50) fixés au cadre (11) l'ensemble comprenant des éléments de bords (32, 36) qui s'étendent le long de bords opposés du store (30) et des moyens de liaison par cordon (35, 37) qui passent sur les moyens du type tringle et qui accoupplent les éléments de bords rigides pour transmettre des forces de tension d'un élément de bord à l'autre pour mettre le store flexible en mouvement de façon à démasquer sélectivement le miroir.

2. Pare-soleil selon le revendication 1, dans lequel le cadre (11) définit un caisson qui s'étend adjacent au miroir, le store pouvant se déplacer entre une position d'extension hors du caisson qui masque le miroir et une position logée dans le caisson pour décrouvrir le miroir pour son utilisation.

3. Pare-soleil selon la revendication 2, dans lequel les moyens du type tringles (40, 50) s'étendent entre les côtés du cadre (11) au niveau des bords supérieur et inférieur du cadre.

4. Pare-soleil selon la revendication 2 ou 3, dans lequel chacun des moyens du type tringle comprend une tringle fixe (45) et un manchon formant rouleau concentrique (42, 52).

5. Pare-soleil selon l'une quelconque des revendications 1 à 4, dans lequel le store se déplace par rapport au miroir dans une direction généralement verticale.

0 143 594

Fig. 1.

Fig. 2.

Fig. 3.

0 143 594

Fig.4.

Fig.6.

Fig.5.

Fig.7.

2

Fig. 8.

Fig. 9.

Fig. 10.

Fig. 11.